# EUROPÄISCHE PATENTSCHRIFT

(11) **EP 4 073 451 B1**
(45) Veröffentlichungstag und Bekanntmachung des Hinweises auf die Patenterteilung: **11.10.2023**
(21) Anmeldenummer: 20824915.1
(22) Anmeldetag: 10.12.2020
(51) Int. Cl.: F28D 20/00, F24T 10/30

(54) **ANORDNUNG UND VERFAHREN ZUR INSTALLATION EINES WENIGSTENS TEILWEISE IN EINEM ERDREICH EINGESENKTEN ENERGIESPEICHERS**
ASSEMBLY AND METHOD FOR INSTALLING AN ENERGY STORE, WHICH IS AT LEAST PARTIALLY SUNK IN THE GROUND
ENSEMBLE ET PROCÉDÉ D'INSTALLATION D'UN ACCUMULATEUR D'ÉNERGIE, QUI EST AU MOINS PARTIELLEMENT ENTERRÉ DANS LE SOL

(30) Priorität: 10.12.2019 DE 102019133712; 25.09.2020 DE 102020125016
(43) Veröffentlichungstag der Anmeldung: 19.10.2022
(73) Patentinhaber: Envola GmbH, 89081 Ulm (DE)
(72) Erfinder: SCHECHNER, Alexander, 89075 Ulm (DE); SCHWENK, Günther, 89520 Heidenheim (DE); IHLE, Gerhard, 89075 Ulm (DE)
(74) Vertreter: Baur & Weber Patentanwälte PartG mbB
(86) Internationale Anmeldenummer: PCT/EP2020/085481
(87) Internationale Veröffentlichungsnummer: WO 2021/116272

(56) Entgegenhaltungen:
- EP-A2- 2 480 839
- CN-A- 102 706 196
- DE-A1-102005 037 997
- FR-A1- 2 465 946
- FR-A1- 2 566 883

## Beschreibung

Die Erfindung betrifft eine Anordnung zur Installation eines wenigstens teilweise in einem Erdreich eingesenkten Energiespeichers und ein Verfahren zur Installation eines wenigstens teilweise in einem Erdreich eingesenkten Energiespeichers mit einer derartigen Anordnung.

Die Verwendung fossiler Energieträger ist nicht nur zunehmend unwirtschaftlich, sondern wird auch aufgrund der damit verbundenen negativen Auswirkungen auf das Klima zunehmend in Frage gestellt. Neben einer Steigerung der Nutzung regenerativer Energiequellen sind zunehmend auch effiziente Systeme zur Energiespeicherung von Nöten, die in Kombination mit intelligenten Steuerungen beispielsweise beim Heizen von Gebäuden oder beim Kühlen von Anlagen für einen reduzierten Energieverbrauch sorgen können. Aufgrund derartiger Maßnahmen lässt sich unabhängig vom verwendeten Energieträger ein hohes Einsparpotential schaffen, was auch die damit verbundenen Installationskosten auffängt.

Aus der DE 29 26 610 A1 ist ein Speicher zur Bereitstellung der Eingangswärmeenergie auf niederem Temperaturniveau für Wärmepumpenanlagen bekannt, die diese Energie aufnehmen und auf höherem Temperaturniveau wieder abgeben. Dabei ist ein Wasserbecken so gestaltet, dass sein Wasserinhalt ohne Beckenbeschädigung einfrieren kann und dass ein am Beckenboden befindliches oder in den Beckenboden eingelassenes Wärmetauschersystem erlaubt, die Abkühlungs- und Gefrierwärme dieses Beckens der Kaltseite einer Wärmepumpe zuzuführen.

Neben der Verwendung eines künstlichen Wasserbeckens ist es auch bekannt, natürliche Gewässer als Speichermedium zu nutzen. So ist aus der DE 10 2015 104 909 A1 ein Energiespeicher bekannt, der einen Wärmetauscher aufweist, der auf einem vorzugweise über eine erste Zuleitung mit Wasser befüllbarem, als See ausgebildetem Unterbecken schwimmend angeordnet ist, wobei über eine zweite Zuleitung Wasser aus dem Unterbecken und über eine dritte Zuleitung den Wärmetauscher durchdringendes Kühlmittel einer Wärmepumpe in getrennten Kreisläufen zuführbar ist, so dass Energie über den Wärmetauscher unter Vereisung des Wassers des Unterbeckens oder in Form von sensibler Wärme aus dem Wasser des Unterbeckens entnehmbar und an einen Verbraucher zur Wärmeabgabe und/oder zur Kälteabgabe weiterleitbar ist.

Desweiteren ist aus der DE 10 2015 121 177 A1 eine schwimmende Vorrichtung zum Einbringen von Wärmeenergie in ein Gewässer sowie zum Entziehen von Wärmeenergie aus dem Gewässer bekannt, die einen Wasserwärmetauscher aufweist, der nach dem Einsetzen der Vorrichtung in das Gewässer in dieses eintaucht und einen Zulauf und einen Ablauf für eine Wärmeträgerflüssigkeit aufweist, die Wärmeenergie an das Gewässer abgeben oder dem Gewässer Wärmeenergie entziehen kann. Die Vorrichtung weist darüber hinaus einen Luftwärmetauscher auf, der von Umgebungsluft durchdrungen werden kann und darüber hinaus einen Einlass für aus dem Gewässer stammendes Wasser mit einem entsprechenden Auslass aufweist, so dass Wasser aus dem Gewässer durch den Luftwärmetauscher strömen kann, wobei Wärmeenergie zwischen der dem Luftwärmetauscher durchströmenden Umgebungsluft und dem den Luftwärmetauscher durchströmenden Wasser übertragbar ist.

Bei der Verwendung eines künstlichen Wasserbeckens sind bereits spezielle Einrichtungen vorgeschlagen worden, die die Installation eines derartigen Wasserbeckens erleichtern sollen.

Zur Installation im Boden wurde demnach in der WO 2019/076978 A1 ein Becken vorgeschlagen, das mit zwei miteinander verbundenen und eine Beckenwandung ausbildenden Seitensegmenten ausgebildet ist, die jeweils eine Wandplatte, die einen Füllraum des Beckens begrenzt, und eine an einer dem Füllraum abgewandten Außenseite der Wandplatte angeordnete Fülltasche zur Befüllung mit Beton umfassen. Des Weiteren weist das Becken ein Gerüst auf, das zwei voneinander beabstandete Vertikalstützen und eine Horizontalstütze umfasst, die die beiden Vertikalstützen miteinander verbindet bzw. diese in einem fixen Abstand zueinander hält. Die Seitensegmente sind derart mit dem Gerüst verbunden, dass diese zum Befüllen der Fülltaschen mit Beton vom Gerüst in einer Vertikalposition gehalten sind.

Die DE 20 2010 015 153 U1 betrifft einen in einem natürlichen Wärmekörper angeordneten stehenden Fluidwärmeaustauscher, der einen stehenden Relaisstation-Fluidspeichertank aufweist und vertikal oder schräg anliegend oder vollständig oder teilweise eingesetzt im natürlichen Wärmekörper angeordnet ist, wobei der Relaisstation-Fluidspeichertank mindestens eine Fluideintrittsöffnung und mindestens eine Fluidaustrittsöffnung aufweist, ein durchfließendes wärmeleitendes Fluid (wie Leitungswasser, Fluß-, See- oder Meerwasser) zwischenspeichert und als Hilfsfluidspeichertank für seichen Wärmekörper dient, wobei im Relaisstation-Fluidspeichertank eine Wärmeaustauscheinrichtung angeordnet ist, die mindestens ein Fluidrohr für ein wärmeleitendes Fluid aufweist, das mit dem Fluid im Relaisstation-Fluidspeichertank einen Wärmeaustausch durchführen kann, und wobei das Fluid im Relaisstation-Fluidspeichertank dann mit dem natürlichen Wärmekörper, wie Erde der dünnen Erdoberfläche, See, Fluß, Meer, Stausee oder künstliche Fluidspeicheranlage, wie Reservoir oder Teich, einen Wärmeaustausch durchführt. In einem Ausführungsbeispiel bildet der Relaisstation-Fluidspeichertank zwei längere Stufen, wobei die obere Stufe größer ist und die untere Stufe kleiner ist, und wobei die größere obere Stufe des Relaisstation-Fluidspeichertanks von einem Gestell gestützt wird und die kleinere untere Stufe in den natürlichen Wärmekörper eingesetzt wird.

Die DE 10 2012 101 541 A1 betrifft einen bodengebundenen Wärmespeicher aufweisend eine Bodenfläche, eine Deckfläche und eine Wandfläche. Mindestens die Wandfläche weist eine Mehrzahl einzelner Wandsegmente auf, und mindestens ein Wärmetauscher ist innerhalb des Wärmespeichers vorgesehen. Der Wärmespeicher weist unter Betriebsbedingungen eine Festkörperfüllung auf. Um einen effizienten Wärmespeicher anzugeben, weisen ein oder mehrere Wandsegmente jeweils mindestens einen Wärmetauscher auf. Der Wärmespeicher ist teilweise ins Erdreich eingesenkt und umfasst eine Hülse und eine Abstützung der Hülse.

Die FR 2 566 883 A1 offenbart eine Anordnung gemäß dem Oberbegriff von Anspruch 1 und zeigt unterirdische Vorrichtungen zur Wärmespeicherung und Verfahren zu deren Bau. Ein unterirdischer Wärmespeicher besteht aus einer Kammer, die aus einer flexiblen und wasserdichten dünnen Hülle besteht, die von einer wärmeisolierenden Schicht umgeben ist und mit wassergesättigtem Sand gefüllt ist. Ein oder mehrere Wärmetauscher sind in den Sand eingelassen und mit externen Rohren verbunden.

Die FR 2 465 946 A1 zeigt einen Speicherbehälter mit einer Außenhaut und einer Innenhaut aus einem flexiblen wasserdichten Material. Die Seitenwände bestehen aus mehreren getrennten Kammern, die aufgeblasen werden können. Die DE 10 2005 037 997 A1 zeigt einen unterirdischen Wärmeenergiespeicher, der folgendes aufweist: mindestens einen in der Erde angeordneten Behälter aus einem flexiblen und/oder elastischen Material, ein in dem Behälter angeordnetes Speichermedium, eine vorzugsweise kastenförmige Wärmedämmung für den Behälter, wobei die Wärmedämmung im Wesentlichen aus einer Anzahl von selbsttragenden, druckfesten und miteinander verbundenen Dämmelementen besteht, und ein an das Speichermedium angekoppeltes Energietransportsystem zur Einspeisung und/oder Entnahme von Wärmeenergie.

Die CN 102 706 196 A zeigt einen weichen Energiespeicher mit einem geschlossenen, weichen Behälter als Flüssigkeitsspeicher.

Die EP 2 480 839 A2 zeigt eine Umhüllung, die in den Untergrund des Erdreichs eingegraben wird und zumindest teilweise einen geothermischen Wärmetauscher aufnimmt.

Ausgehend von diesem Stand der Technik haben sich die Erfinder nun die Aufgabe gestellt, eine Anordnung und ein Verfahren zur Installation eines wenigstens teilweise in einem Erdreich eingesenkten Energiespeichers zu schaffen, nach denen der Energiespeichers besonders einfach und kostengünstig zu installieren ist und insbesondere die Verwendung speziell bereitzustellender Maschinen oder Transportmittel entbehrlich macht.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Anordnung zur Installation eines wenigstens teilweise in einem Erdreich eingesenkten Energiespeichers umfassend eine Hülse und eine verstellbare Abstützung der Hülse angegeben, wobei die Abstützung eine Vielzahl von schwenkbaren und umlaufenden Haltevorrichtungen umfasst, die entlang wenigstens einer Schwenkachse übereinanderliegend entlang einer Längsachse angeordnet sind und die sich von einer ersten Position mit einer ersten Außenform in eine zweite Position mit einer zweiten Außenform verlagern lassen, wobei die zweite Außenform ein größeres Volumen als die erste Außenform umschließt und die zweite Außenform einer Innenform der Hülse entspricht, in die der Energiespeicher einsetzbar ist, wobei die Hülse wenigstens teilweise in dem Erdreich versenkt positionierbar ist und vor dem Einsetzen des Energiespeichers in ihr Inneres durch die Abstützung formstabil gehalten ist.

Demnach wird erfindungsgemäß eine Anordnung aus Hülse und verstellbarer Abstützung verwendet, die bis zum Einsetzen des Energiespeichers in das Innere der Hülse einen formstabilen Aufbau der Anordnung ermöglichen, so dass das ansonsten im Stand der Technik übliche Verbauen der Baugrube umgangen werden kann. Desweiteren ist es gemäß der Erfindung auch nicht notwendig, Schalungen, Gerüste oder dergleichen in die Baugrube einzubringen, was deren Arbeitsraum zusätzlich einschränken würde. Nachdem die Hülse, die bezüglich ihrer Innenabmessungen auf den später einzusetzenden Energiespeicher abgestimmt ist, an der dafür vorgesehenen Position angeordnet wurde, wird das dadurch definierte Volumen von der verstellbaren Abstützung im Inneren der Hülse gehalten, so dass auch ein seitlich wirkender Druck keine Veränderungen mehr hervorrufen kann, bis der Energiespeicher anstelle der verstellbaren Abstützung in das Innere der Hülse eingesetzt wird. Da der Energiespeicher typischerweise mit Wasser als Speichermedium arbeitet, ist im späteren Betrieb ein Gegendruck zu dem auf die Seitenwände der Hülse einwirkenden Druckkräfte des Erdreichs gegeben, so dass dann keine weiteren Abstützungen mehr nötig sind. Auf diese Weise ist es möglich, die Vorbereitungen zum Einsatz eines Energiespeichers, welche auch die Verlegung von Rohrleitungen und anderen Installationsleitungen beinhalten können, zu einem frühen Zeitpunkt während einer Bauphase vorzunehmen, so dass nach Abschluss der Baumaßnahmen lediglich ein bereits fertig montierter Energiespeicher die verstellbare Abstützung ersetzen kann. Da sich die Abstützung entlang von wenigstens einer Schwenkachse verschwenken lässt, ist es möglich, ein radiales Außenmaß so zu wählen, dass die Abstützung auf einer Ladefläche eines Lastkraftwagens transportiert werden kann, so dass kein Sondertransport von überbreiten Gütern notwendig wird, was mit zusätzlichen Kosten verbunden wäre. Die Hülse kann soweit elastisch sein, dass ihr Außenmaß ebenfalls auf Durchfahrtsbreiten konventioneller Fahrzeuge abgestimmt sein kann. Da die erfindungsgemäße Anordnung somit einfach zu transportieren ist, können auch in Wohngebieten oder an schwer zugänglichen Stellen entsprechende Aufstellorte für Energiespeicher genutzt werden. Sofern der Energiespeicher bezüglich seiner Außenabmessungen standardisierte Dimensionen aufweist, kann die verstellbare Abstützung mehrfach verwendet werden, so dass ihr Einsatz nicht auf einen konkreten Energiespeicher begrenzt ist. Im Vergleich zum Auskleiden einer Baugrube mittels entsprechenden Verbaumaßnahmen oder Bereitstellen eines Beckens mit Betonwänden stellt die erfindungsgemäße Anordnung eine kosteneffiziente und einfache Maßnahme dar, die auch durch lokale Bauunternehmen durchgeführt werden kann, ohne dabei auf spezielle Transportvorrichtungen oder Maschinen angewiesen zu sein. Die Erfindung könnte daher zur weiteren Verbreitung von Energiespeichern beitragen, was bezüglich der Reduzierung von klimaschädlichen Gasen und energieeffizienten Heizen bzw. Kühlen wünschenswert wäre.

Gemäß einer Ausführungsform der Erfindung ist die Hülse als mehrteilige Kunststoffbahn in Form von Hülsensegmenten bereitgestellt, die an ihren Enden an einer Längsnaht verbunden sind. Dabei kann die Kunststoffbahn entlang der Längsnaht verschweißt oder mittels einer Verbindungsplatte gesichert sein.

Es ist nicht erforderlich, die Hülse als bereits fertiggestelltes Bauteil an den Einsatzort zu transportieren, da am Aufstellort durch das Verbinden der Enden der Kunststoffbahn an den Längsseiten die endgültige Außenform der Hülse geschaffen werden kann. Dies ermöglicht einen platzsparenden Transport der Hülse, da die Kunststoffbahn in einer Art aufgerollten Zustand an den Einsatzort transportiert werden kann. Neben dem Verbinden an ihren Enden der Längsnaht mittels Verschweißens wäre auch ein Verkleben oder ein Verschrauben oder Nieten über die Verbindungsplatte denkbar. Andere Verbindungsmöglichkeiten sind jedoch nicht ausgeschlossen.

Gemäß einer weiteren Ausführungsform der Erfindung sind zwei Schwenkachsen vorgesehen, die mit ersten Segmenten von Haltevorrichtungen verbunden sind, wobei sich an die erste Schwenkachse zweite Segmente von Haltevorrichtungen und an die zweite Schwenkachse dritte Segmente von Haltevorrichtungen anschließen.

Gemäß dieser Ausführungsform werden die Haltevorrichtungen dreiteilig ausgebildet und weisen daher erste, zweite und dritte Segmente auf. Zwischen den Schwenkachsen sind die ersten Segmente angeordnet, an die sich jeweils zweite bzw. dritte Segmente anschließen, so dass insgesamt ein kreisförmiger oder nahezu kreisförmiger Aufbau der Haltevorrichtungen erreicht werden kann, sofern diese in die zweite Position mit der zweiten Außenform verlagert sind. Demnach ergibt sich insgesamt ein geringes Volumen in der ersten Position mit verschwenkten Haltevorrichtungen, wobei hier jeweils ein erstes Segment mit einem zweiten Segment an der ersten Schwenkachse und ein erstes Segment mit dem dritten Segment an der zweiten Schwenkachse verschwenkbar ist. Das erste Segment kann bezüglich seiner Ausdehnung so gewählt werden, dass es in etwa ein Drittel des Umfangs der Haltevorrichtungen abdeckt.

Gemäß einer weiteren Ausführungsform der Erfindung sind die zweiten Segmente von den Haltevorrichtungen und die dritten Segmente von den Haltevorrichtungen an ihren den jeweiligen Schwenkachsen abgewandten Enden mit weiteren Segmenten vorzugsweise über weitere Schwenkachsen verbunden, wobei die weiteren Segmente miteinander über eine Verstelleinrichtung verstellbar verbunden sind.

Demnach ist das Überführen von der ersten Position zur zweiten Position beim Einsetzen der Abstützung bzw. von der zweiten Position zur ersten Position beim Entfernen der Abstützung aus dem Inneren der Hülle durch einen Verstellmechanismus gewährleistet, der so ausgestaltet sein kann, dass jede Haltevorrichtung einzeln oder auch in größeren Gruppen oder insgesamt verschwenkbar sind. Insbesondere das Anbringen verstellbarer Gewindestangen, über die durch eine entsprechende Drehbewegung eine Verlagerung der Segmente zueinander erfolgen kann, stellt eine einfache und dennoch zuverlässige Möglichkeit dar, die Enden der zweiten bzw. dritten Segmente der Haltevorrichtungen relativ zueinander zu bewegen. Eine derartige Verschwenkung der Segmente kann beispielsweise durch einen Monteur vorgenommen werden, der dazu in das Innere der Abstützung steigt, um den Verstellmechanismus beispielsweise in Form der verstellbaren Gewindestangen zu bedienen.

Gemäß einer weiteren Ausführungsform der Erfindung ist das weitere Segment oder sind beide weiteren Segmente an dem der Verstelleinrichtung zugewandten Ende über eine Verriegelungsleiste mit einer Schwenkachse verbunden.

Dies sichert nach Überführen in die endgültige Position die Haltevorrichtungen zusätzlich.

Gemäß einer weiteren Ausführungsform der Erfindung sind die Haltevorrichtungen in Form eines Rahmens mit vertikalen Rahmensegmenten und horizontalen Rahmensegmenten oder auch flächig und zumindest an ihrer Außenseite in Form von Teilkreisringen ausgebildet. Dabei können die Haltevorrichtungen als vorgefertigte Metallteile ausgebildet sein.

Die Außenseite der Haltevorrichtungen folgt dabei der gewünschten Innenform der Hülse, die typischerweise als Kreiszylinder ausgebildet werden soll. Andere, von einer Kreisfläche abweichende Querschnitte, sind jedoch nicht ausgeschlossen, wären jedoch unüblich. Hierbei können die Haltevorrichtungen in Form von Metallprofilen als vorgefertigte Metallteile bereitgestellt sein, deren Hauptflächen in Längsrichtung weisen, so dass lediglich die Seitenkanten mit der Innenfläche der Hülse in Berührung sind. Eine großflächige Abstützung der Innenhülse ist nicht erforderlich, wie Versuche gezeigt haben.

Gemäß einer weiteren Ausführungsform der Erfindung sind die Vielzahl von Haltevorrichtungen parallel zueinander angeordnet, wobei die Haltevorrichtungen eine Höhe aufweisen, welche mit der des Hülsensegments korrespondiert.

Eine Vielzahl von Haltevorrichtungen, die vorzugsweise unter vorgegebenen Abständen parallel zueinander angeordnet sind, ermöglichen das Abstützen der Innenfläche der Hülse an mehreren Umfangspositionen, so dass nur eine geringe Einbuchtung der Hülse bis zum Einsetzen des Energiespeichers erfolgen kann. Die Einbuchtung ist dabei so gering, dass die Abstützung nach Verschwenken der Haltevorrichtungen von der zweiten Position in die erste Position überwunden werden kann, d. h. eine Entnahme der Abstützung möglich ist. Insbesondere bei einer Hülse aus Kunststoffmaterial ist ein geringes Einbuchten jedoch unschädlich, so dass insgesamt die Stabilität der Anordnung gewährleistet bleibt.

Gemäß einer weiteren Ausführungsform der Erfindung ragen die Schwenkachsen an ihrer dem Boden des Erdreichs abgewandten Seite über die Haltevorrichtungen hinaus und sind mit einer Aufnahme für einen Abschlussträger versehen, der bis zum Einsetzen des Energiespeichers mit einer Abdeckung der Hülse versehen sein kann.

Nachdem die Hülse zusammen mit der Abstützung in die Baugrube eingebracht sind, ist es erfindungsgemäß möglich, den dabei entstehenden Hohlraum über eine geeignete Abdeckung zu verschließen, die befahrbar oder zumindest begehbar ausgestaltet sein kann. Die Abdeckung ruht auf einem Abschlussträger, der mit den Schwenkachsen verbunden ist, so dass keine Belastung auf die Haltevorrichtungen durch Befahren oder Begehen ausgeübt wird. Da die Schwenkachsen auf der gegenüberliegenden Seite direkt auf einem typischerweise als Betonfundament ausgebildeten Boden liegen, ist eine Kraftaufnahme über die Abschlussträger und die Schwenkachsen ohne weiteres möglich. Aus Gründen der Arbeitssicherheit kann daher die Innenhülse nebst Abstützung verschlossen werden, so dass keine zusätzliche Sicherung erfolgen muss und dennoch keine Gefahr besteht, dass unbeabsichtigt Gegenstände, Tiere oder Personen in das Innere der Hülse gelangen.

Des Weiteren können zusätzlich oder auch alternativ auf einer der Schwenkachsen abgewandten Seite zusätzliche vertikale Streben angeordnet sein, die vorzugsweise die Abdeckung der Hülse zusätzlich oder auch allein tragen können.

Gemäß der Erfindung wird auch ein Verfahren zur Installation eines wenigstens teilweise in einem Erdreich eingesenkten Energiespeichers mit einer oben beschriebenen Anordnung geschaffen, wobei nach Aushub einer Einsenkung in einem Erdreich sukzessive einzelne Hülsensegmente der Hülse eingesetzt werden, nach jedem Einsetzen eines Hülsensegments eine Haltevorrichtung der Abstützung in ihrer ersten Position in das Innere der Hülse eingeführt wird und bis zum Einsetzen des Energiespeichers in ihre zweite Position gebracht wird, und anschließend weitere Hülsensegmente und Haltevorrichtungen der Abstützung eingebracht werden, bis die Hülse vollständig zusammengesetzt ist.

Die Abstützung dient demnach als temporäre Versteifung der Hülse und kann nach Einsetzen des Energiespeichers auch für weitere Projekte verwendet werden.

Der Bereich zwischen Hülse und umliegenden Erdreich außerhalb der Baugrube kann vorzugsweise mit selbst komprimierbarem Schüttgut befüllt werden, wobei es in anderen Ausführungsformen ebenso möglich ist, den Bereich außerhalb der Hülse mit Erdreich zu füllen, in das eine oder mehrere Lagen eines Textilgewebes, beispielsweise eines Vliesstoffes, eingebracht wurden, die das nun eingebrachte Erdreich in der Baugrube stabilisieren können. Das Textilgewebe kann auch mit der Hülse verbunden sein. Hierzu ist es denkbar, geeignete Verankerungspunkte, wie Haken oder dergleichen anzubringen, die beispielsweise aufgeklebt oder angeschraubt sein können.

Nachfolgend werden einige Ausführungsbeispiele anhand der Zeichnung näher erläutert. Es zeigen:
- Figur 1: eine perspektivische Seitenansicht einer erfindungsgemäßen Anordnung aus Hülse und Abstützung,
- Figur 2: eine weitere Ausführungsform einer Hülse in einer perspektivischen Seitenansicht,
- Figur 3: eine weitere Ausführungsform einer Hülse in einer perspektivischen Seitenansicht,
- Figur 4: die Anordnung aus Figur 1 in einer weiteren perspektivischen Seitenansicht,
- Figur 5: die Anordnung aus Figur 4 in einer weiteren perspektivischen Seitenansicht,
- Figur 6: einen Energiespeicher in einer perspektivischen Seitenansicht zur Verwendung mit der erfindungsgemäßen Anordnung,
- Figur 7: Bestandteile einer weiteren Ausführungsform der erfindungsgemäßen Anordnung in einer perspektivischen Seitenansicht,
- Figur 8: eine erfindungsgemäße Anordnung in einer Draufsicht von einer Unterseite,
- Figur 9: die erfindungsgemäße Anordnung aus Figur 8 in einer Draufsicht von einer Oberseite,
- Figur 10: Bestandteile einer weiteren Ausführungsform der erfindungsgemäßen Anordnung in einer perspektivischen Seitenansicht,
- Figur 11: die erfindungsgemäße Anordnung aus Figur 8 in einer perspektivischen Seitenansicht von einer Unterseite,
- Figur 12A-C: Bestandteile einer weiteren Ausführungsform der erfindungsgemäßen Anordnung in einer perspektivischen Seitenansicht,
- Figur 13: weitere Bestandteile der Ausführungsform nach Figur 12A-C in einer perspektivischen Seitenansicht, und
- Figur 14: die erfindungsgemäße Anordnung der Ausführungsform nach Figur 12A-C in einer perspektivischen Seitenansicht.

In den Figuren sind gleiche oder funktional gleich wirkende Bauteile mit den gleichen Bezugszeichen versehen.

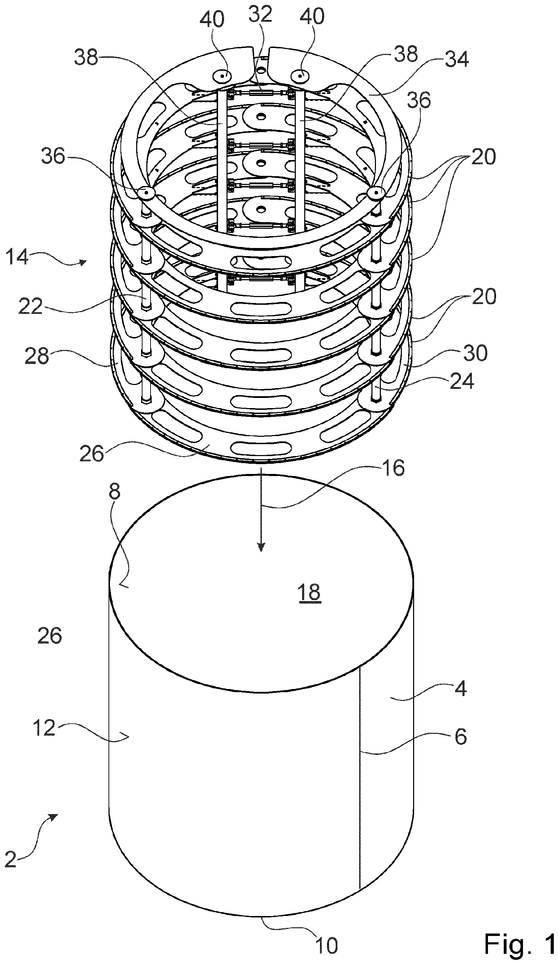

Unter Bezugnahme auf Figur 1 wird nachfolgend eine erste Ausführungsform einer erfindungsgemäßen Anordnung 2 beschrieben. In Figur 1 ist die erfindungsgemäße Anordnung 2 in einer perspektivischen Seitenansicht dargestellt, wobei die Anordnung 2 eine Hülse 4 umfasst, die im gezeigten Beispiel eine im Wesentlichen zylindrische Form aufweist.

Die Hülse 4 kann als Kunststoffbahn bereitgestellt sein, die aus einem dünnen flächigen und biegsamen Material besteht. Die Kunststoffbahn kann dabei an ihren Enden so zusammengefügt sein, dass sich eine Längsnaht 6 ergibt, die beispielsweise entlang der axialen Richtung der zylinderförmigen Hülse 4 angeordnet ist. In anderen Ausführungsformen ist es jedoch möglich, die Längsnaht 6 in anderen Orientierungen oder auch in Zick-Zack-Form oder dergleichen anzuordnen. Die Kunststoffbahn kann entlang der Längsnaht 6 beispielsweise verschweißt sein.

Die Hülse 4 ist bezüglich ihrer Innenabmessung der Innenfläche 8 so geformt, dass später ein Energiespeicher eingeführt werden kann. Üblicherweise werden Energiespeicher in einem Erdreich angebracht, wobei, wie eingangs erwähnt, ein Speichermedium in Form von Flüssigkeit, insbesondere Wasser, vorhanden ist, der Wärme hinzugefügt oder entnommen werden kann. Zur Installation des Energiespeichers wird daher zunächst eine Baugrube erstellt werden, die auf ihrer Unterseite mit einem typischerweise betonierten Fundament versehen wird. Auf dieses Fundament wird die Hülse 4 mit ihrer Unterseite 10 aufgestellt. Bevor die Baugrube nun wieder außerhalb der Hülse 4 verschlossen werden kann, wird der Bereich zwischen einer Außenfläche 12 der Hülse 4 und einer Böschung der nicht in Figur 1 dargestellten Baugrube mit Material gefüllt werden, so dass nun über die Außenfläche 12 der Hülse 4 seitliche Kräfte auf die Hülse 4 wirken würden, die bei einem dünnen flächigen Kunststoffmaterial zu einer Verformung der Hülse 4 führen würden.

Um dieser Belastung entgegenzuwirken, wird vor Einbringen des Füllmaterials an der Außenfläche 12 zunächst eine Abstützung 14 bereitgestellt, die über eine Einschubrichtung 16 in das Innere 18 der Hülse 4 gebracht wird. Die Abstützung 14 weist dabei eine Außenform auf, die mit der Innenfläche 8 der Hülse 4 korrespondiert.

Um ein Abstützen der Innenfläche 8 der Hülse 4 zu erreichen, ist es jedoch nicht notwendig, die Innenfläche 8 vollständig im Inneren 18 der Hülse 4 mit einer Abstützung auszukleiden, da eine lediglich an einigen Stellen wirkende Abstützung vollkommen ausreichend ist, um nach Einbringen eines Füllmaterials an der Außenfläche 12 der Hülse 4 für die nötige Stabilität zu sorgen. Die Abstützung 14 weist daher bezüglich ihrer Außenform nicht die Gestalt eines Volumenkörpers auf, sondern ist aus einer Vielzahl von Haltevorrichtungen 20 aufgebaut, die im Wesentlichen parallel zueinander angeordnet sind, so dass sie in bestimmten Höhen auf die Innenfläche 8 der Hülse 4 wirken. Die Haltevorrichtungen 20 können dabei, wie in Figur 1 gezeigt ist, äquidistant angeordnet sein, wobei in anderen Ausführungsformen auch eine andere Gestalt gewählt sein kann.

Die Abstützung 14 kann bezüglich ihrer Außenform verändert werden, wofür eine erste Schwenkachse 22 und eine zweite Schwenkachse 24 vorgesehen sind, die entlang einer parallel zur Einschubrichtung 16 gewählten Längsrichtung angeordnet sind. Durch die erste Schwenkachse 22 und die zweite Schwenkachse 24 werden die Haltevorrichtungen 20 in ein erstes Segment 26, ein zweites Segment 28 und ein drittes Segment 30 aufgeteilt. Die Haltevorrichtungen 20 können daher um die erste Schwenkachse 22 bezüglich des ersten Segments 26 und des zweiten Segments 28 geschwenkt werden, während bezüglich der zweiten Schwenkachse 24 ein Verschwenken des ersten Segments 26 und des dritten Segments 30 möglich ist. Das der ersten Schwenkachse 22 abgewandte Ende des zweiten Segments 28 und das der zweiten Schwenkachse 24 abgewandte Ende des dritten Segments 30 der Haltevorrichtungen 20 sind über eine Verstelleinrichtung 32 miteinander so verbunden, dass die Enden aufeinander zu bzw. voneinander weg bewegt werden können. Daher kann bei maximalem Verschwenken der Enden zueinander eine Außenform der Abstützung 14 erreicht werden, die kleiner ist als die Innenabmessung der Hülse 4.

In dieser ersten Position kann die Abstützung 14 auf einfache Weise in das Innere 18 der Hülse 4 gebracht werden, so dass, nachdem diese über die Einschubrichtung 16 eingesetzt wurde, die Verstelleinrichtung 32 derart betätigt wird, dass die Enden nun voneinander weg bewegt werden, so dass die Abstützung 14 in eine zweite Position gelangt, bei der ihre Außenform der Innenfläche 8 der Hülse 4 entspricht. Diese zweite Außenform ist zur Verdeutlichung in Figur 1 dargestellt. Die erste Schwenkachse 22 und die zweite Schwenkachse 24 sind im gezeigten Ausführungsbeispiel als vertikal angeordnete Streben ausgeführt, die von den jeweiligen Segmenten der Haltevorrichtungen 20 umschlossen sind. Die Haltevorrichtungen 20 werden vorteilhaft als vorgefertigte Metallteile bereitgestellt werden, die zumindest bezüglich ihrer Außenform in Form von Teilkreisringen ausgebildet sind, so dass sie mit der zylindrischen Innenfläche 8 der Hülse 4 korrespondieren.

Die erste Schwenkachse 22 und die zweite Schwenkachse 24 ruhen nach Einsetzen der Abstützung 14 in das Innere der Hülse 4 auf dem oben beschriebenen Fundament. An ihrem gegenüberliegenden Ende, das auf dem Niveau der Oberkante der Baugrube liegt, kann zusätzlich ein Abschlussträger 34 vorgesehen sein, wofür die erste Schwenkachse 22 und die zweite Schwenkachse 24 etwas über die letzte Haltevorrichtung 20 hinaus ragen und mit einer entsprechenden Aufnahme 36 versehen sind.

Des Weiteren ist es denkbar, dass weitere vertikale Streben 38 parallel zu den Schwenkachsen 22 und 24 angeordnet sind, die ebenfalls über eine geeignete Aufnahme 40 eine Verbindung zu dem Abschlussträger 34 eingehen. Die zusätzlichen vertikalen Streben 38 werden bevorzugt im Bereich der Enden des zweiten Segments 28 bzw. des dritten Segments 30 der Haltevorrichtungen 20 angeordnet sein, da dieser Bereich nicht mehr von den Schwenkachsen 22 und 24 unterstützt wird. Der Abschlussträger kann, wie weiter unten noch näher erläutert wird, mit einer Abdeckung versehen sein, um das Innere 18 der Hülse 4 auch bei eingebrachter Abstützung 14 zu verschließen, so dass keine Gegenstände, Tiere oder Menschen in das Innere 18 fallen können. Die mechanische Stabilität über die Schwenkachsen 22 und 24 sowie den zusätzlichen vertikalen Streben 38 kann so gewählt sein, dass die Abdeckung befahrbar oder begehbar ist.

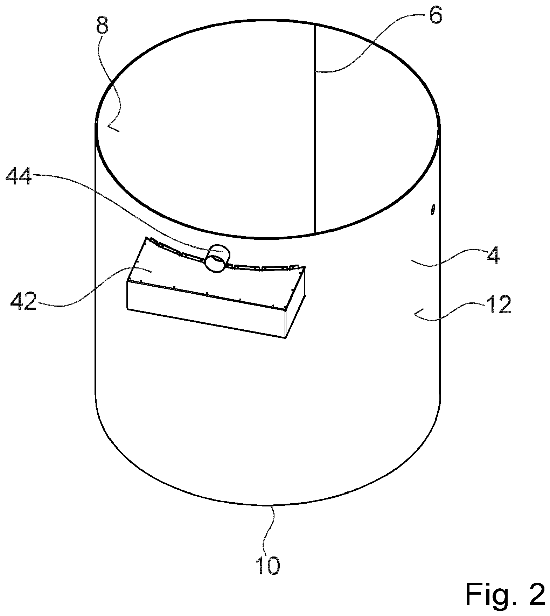

Unter Bezugnahme auf Figur 2 wird nachfolgend eine weitere Ausführungsform der Hülse 4 dargestellt. In dieser Ausführungsform weist die Hülse 4 einen Anschlusskasten 42 sowie eine Durchleitung 44 auf, die entsprechende Anschlussleitungen für den Energiespeicher enthalten, so dass nach Einbringen der Hülse 4 in die Baugrube bereits eine Verbindung mit einer Wärmepumpe oder dergleichen im Inneren eines Gebäudes geschaffen werden kann, bevor die Baugrube verschlossen wird. Dies erleichtert die spätere Installation des Energiespeichers erheblich und benötigt insbesondere keine erneute Öffnung des Erdreichs. Im Bereich der Außenfläche 12 wird typischerweise ein Auffüllen der Baugrube mit einem selbstkomprimierbaren Schüttgut durchgeführt werden, um die auf die Hülse 4 auch bei eingebrachter Abstützung 14 wirkenden Kräfte gering zu halten.

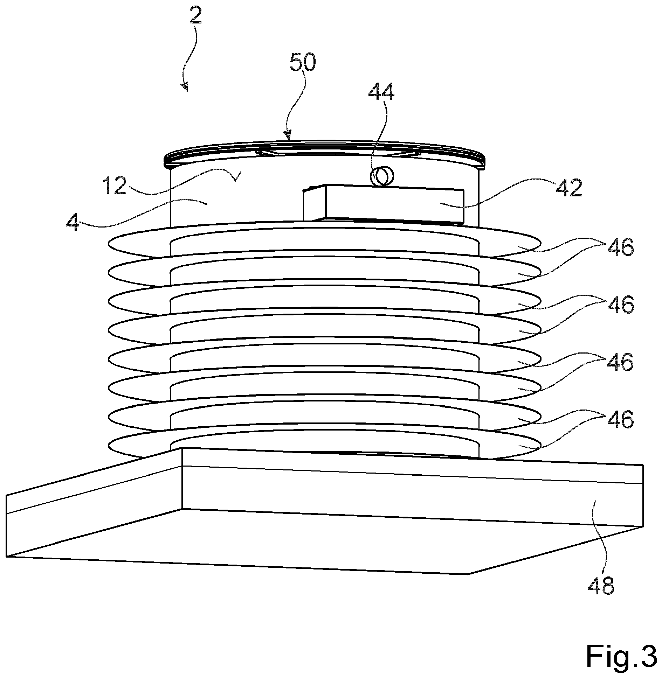

In Figur 3 ist eine weiter Ausführungsform der erfindungsgemäßen Anordnung 2 mit der Hülse 4 gezeigt, wobei zusätzlich zu der in Figur 2 bereits erläuterten Anschlussmöglichkeiten für den Energiespeicher in Form des Anschlusskastens 42 und der Durchleitung 44 mehrere Ebenen eines Textilgewebes 46 angedeutet sind, die die Außenfläche 12 der Hülse 4 umgeben. Das Textilgewebe 46 kann dabei bis an die Außenfläche 12 der Hülse 4 reichen, wobei die einzelnen dargestellten Bahnen sukzessive bei Auffüllen mit Erdreich eingebracht werden, um den Außenbereich zwischen Hülse 4 und der Böschung der Baugrube beim Befüllen zu stabilisieren. Das Textilgewebe 46 kann auch über geeignete Haken oder dergleichen mit der Hülse 4 verbunden sein. Des Weiteren ist in Figur 3 ein bei Fertigstellung der Baugrube erzeugte Fundament 48 zu erkennen, welches beispielsweise in Form eines Betonsockels oder dergleichen ausgebildet sein kann. Desweiteren ist in Figur 3 zumindest der Deckel eines Energiespeichers 50 zu erkennen.

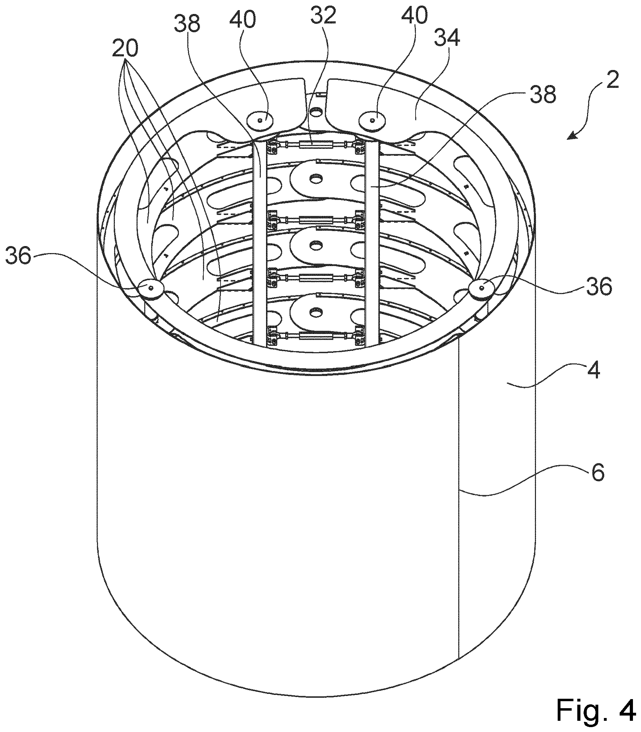

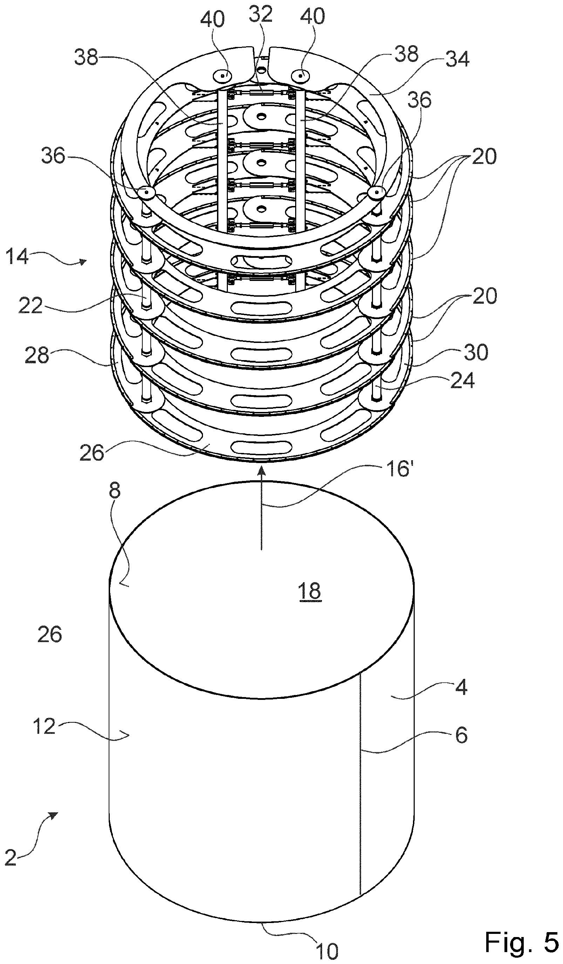

Bevor jedoch ein Energiespeicher in das Innere der Hülse 4 gebracht werden kann, sind die nachfolgend unter Bezugnahme auf die Figuren 4 und 5 beschriebenen Schritte durchzuführen.

Der Ausgangspunkt ist nun in Figur 4 dargestellt, d. h. die Abstützung 14 ist nun im Inneren der Hülse 4 angeordnet und die Hülse 4 wird im Außenbereich mit Erdreich oder Schüttgut verfüllt. In diesem Stadium sind die Anschlussleitungen bereits zu einem Gebäude gelegt worden. Nachdem nun die Versorgung des Gebäudes mit einem Energiespeicher fertiggestellt werden soll, erfolgt eine Anlieferung und die Abstützung 14 wird aus dem Inneren der Hülse 4 entfernt.

Dies ist in Figur 5 dargestellt. Man erkennt, dass die Abstützung 14 entlang der Ausführrichtung 16' nun aus dem Inneren 18 der Hülse 4 entnommen werden kann, wobei, wie oben beschrieben, bereits die Verstelleinrichtungen 32 entsprechend betätigt werden können, so dass sich die Haltevorrichtungen 20 in der ersten Position befinden können. Das Innere 18 der Hülse 4 ist nun freigelegt, so dass in das Innere 18 ein Energiespeicher 50 eingebracht werden kann. Der kurzfristig auf die Hülse 4 wirkende Druck des umgebenden Erdreichs ist unschädlich, da keine Zeitabstände zwischen dem Entfernen der Abstützung 14 und dem Einbringen eines Energiespeichers 50 erfolgen.

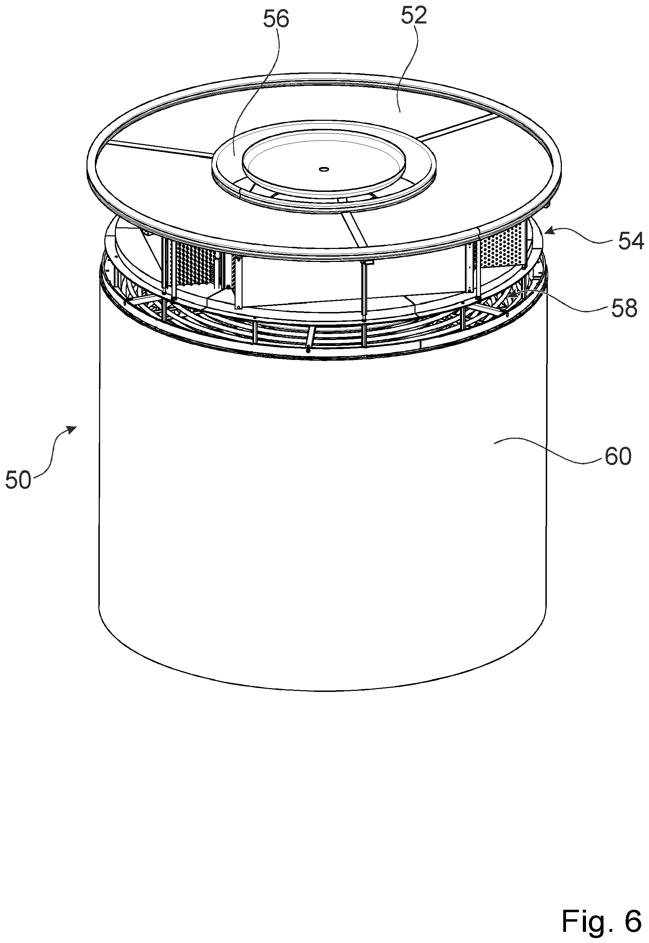

Unter Bezugnahme auf Figur 6 ist beispielhaft ein Energiespeicher 50 gezeigt, der lediglich zur Verdeutlichung kurz skizziert wird. Die eigentliche Ausgestaltung des Energiespeichers 50 ist jedoch nicht Gegenstand dieser Erfindung. Der Energiespeicher kann nach oben hin, d. h. nach Einbringen in die Hülse 4 über einen Deckel 52 verschlossen sein, wobei unterhalb des Deckels 52 ein erster Wärmetauscher 54 angeordnet ist, der Energie von der Umgebungsluft aufnimmt bzw. an diese abgibt. Dazu ist der Deckel 52 mit einer umlaufenden Öffnung 56 versehen, so dass Luft vom Seitenrand des Deckels 52 über die Öffnung 56 mit der Umgebung ausgetauscht werden kann. Im unteren Bereich weist der Energiespeicher 50 einen zweiten Wärmetauscher 58 auf, der aus einer Vielzahl von Rohren besteht, die in einem Flüssigkeitsbecken liegen und mit dieser Flüssigkeit Energie austauschen können. Das Flüssigkeitsbecken wird beim Energiespeicher 50 über eine Folie 60 gebildet, die einen nicht dargestellten Boden aufweist und eine zylindrische Außenfläche annehmen kann.

Nach Einsetzen des Energiespeichers 50 in das Innere der oben beschriebenen Hülse 4 wird das Flüssigkeitsreservoir beispielsweise mit Wasser gefüllt werden, so dass die Folie 60 einen Gegendruck auf der Innenfläche 8 der Hülse 4 ausüben kann, so dass kein Ausbeulen der dünnwandigen Hülse 4 zu erwarten ist. Im Bereich des ersten Wärmetauschers 54 herrscht nur ein geringer seitlicher Druck, so dass hier keine weitere Abstützung mehr nötig ist. Des Weiteren ist es in anderen Ausführungsformen auch möglich, dass der erste Wärmetauscher 54 oberhalb der Oberkante des Erdreichs angeordnet wird und beispielsweise mittels eines geeigneten Gitters oder dergleichen verschlossen wird.

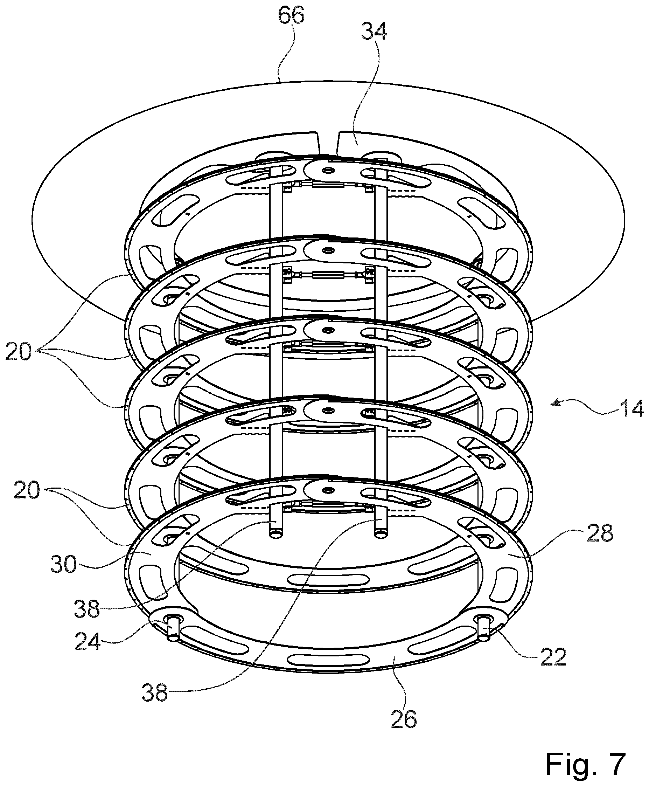

Unter Bezugnahme auf Figur 7 sind Teile der Anordnung nochmals in anderer Darstellung gezeigt. Hier folgt nun eine perspektivische Darstellung von einer Unterseite her, wobei lediglich die Abstützung 14 ohne Hülse 4 dargestellt ist. Zusätzlich ist noch eine bereits oben beschriebene Abdeckung 66 gezeigt, die auf dem Abschlussträger 34 ruht, um das Innere der Abstützung 14 vor Installation eines Energiespeichers 50 zu verschließen. Desweiteren ist die Lage der vertikalen Streben 38 sowie der einzelnen Segmente 26, 28 und 30 der Haltevorrichtungen 20 zu erkennen, die um die erste bzw. zweite Schwenkachse 22 und 24 parallel zueinander angeordnet sind.

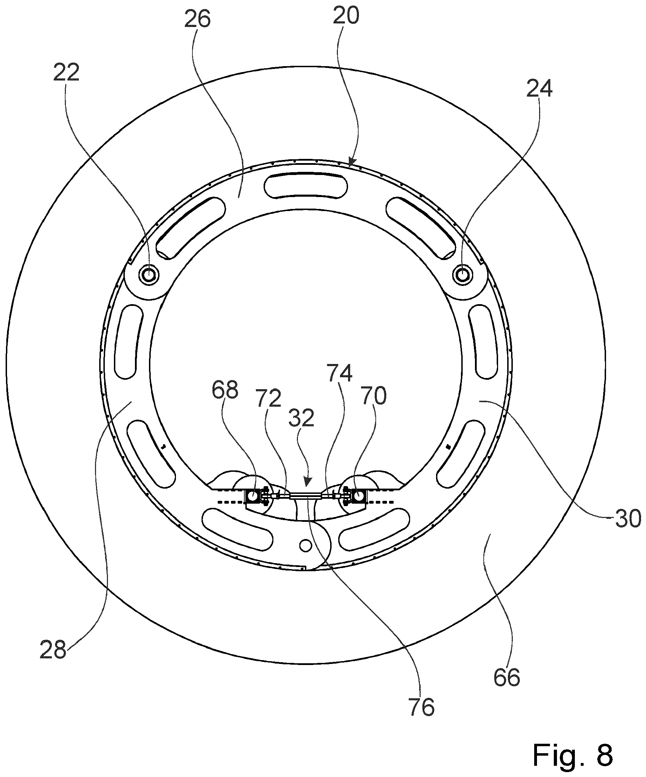

Unter Bezugnahme auf Figur 8 ist nun eine Draufsicht der Ausführungsform gemäß Figur 7 von der Unterseite aus gezeigt. Man erkennt, dass die Verstelleinrichtung 32 sowohl mit dem zweiten Segment 28 als auch mit dem dritten Segment 30 verbunden ist, wozu die Segmente 28, 30 jeweils eine entsprechende Anschlussvorrichtung 68 bzw. 70 aufweisen. Die erste Anschlussvorrichtung 68 ist mit dem zweiten Segment 28 zugeordnet und mit einer ersten Gewindestange 72 verbunden. Die zweite Anschlussvorrichtung 70 ist dem dritten Segment 30 zugeordnet und mit einer zweiten Gewindestange 74 versehen. Die beiden Gewindestangen 72 und 74 werden über eine längliche Überwurfmutter 76 miteinander verbunden, so dass die beiden Segmente 28 und 30 durch Betätigen der Überwurfmutter gegeneinander verlagert werden können. Wie Figur 8 zu entnehmen ist, bildet die Verstelleinrichtung 32 mit den zusätzlichen Streben 38 eine Einheit.

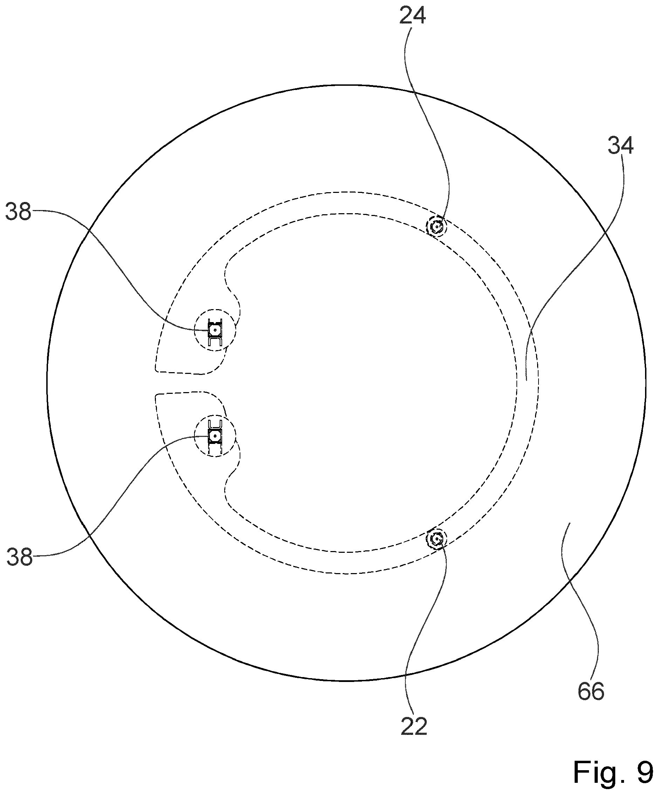

Unter Bezugnahme auf Figur 9 ist nochmals eine Draufsicht von der Oberseite aus gezeigt, die nach Abschluss mit der Abdeckung 66 eine Ebene mit dem umgebenden Erdreich bildet. Man erkennt, dass die Abdeckung 66 über die beiden Schwenkachsen 22 und 24 sowie die zusätzlichen vertikalen Streben 38 an mehreren Positionen am Abschlussträger 34 unterstützt wird, so dass die Abdeckung 66 stabil auf der Abstützung 14 ruht, wobei die Abdeckung 66 so ausgeführt sein kann, dass diese begehbar oder auch befahrbar ist. Durch die Abdeckung 66 kann verhindert werden, dass bis zur Installation des Energiespeichers 50 Gegenstände, Tiere oder Menschen in das Innere der Hülse gelangen können. Ebenso ist das Innere der Hülse gegen Umwelteinflüsse geschützt, so dass insbesondere keine Niederschläge, wie Regen oder Schnee direkt in das Innere der Hülse gelangen können bzw. Verunreinigungen oder achtlos weggeworfene Gegenstände eingeführt werden. Die erfindungsgemäße Anordnung ermöglicht es daher, bereits zu einer frühzeitigen Bauphase eine Installation eines Energiespeichers 50 vorzubereiten, wobei lediglich einfache Tiefbauarbeiten erfolgen müssen, die anderen Arbeiten vorgelagert werden können.

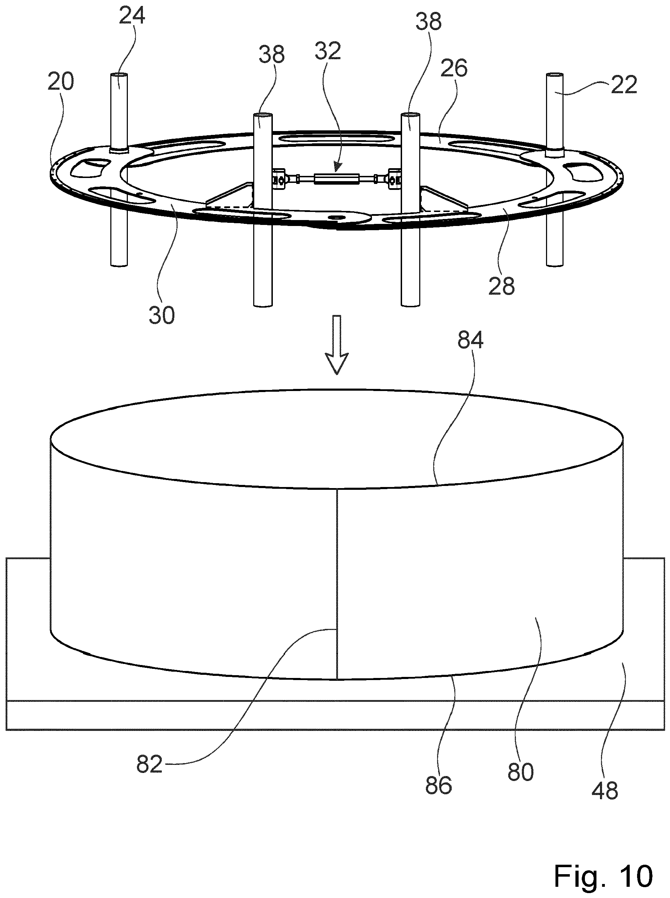

Unter Bezugnahme auf Figur 10 wird nachfolgend eine weitere Ausführungsform der Erfindung beschrieben, bei der die Abstützung 14 nicht als Ganzes in das Innere der Hülse 4 eingebracht wird, sondern bei der die Abstützung 14 abschnittsweise vom Fundament her aufgebaut wird. Dazu wird anstelle der Hülse 4 zunächst ein Hülsensegment 80 bereitgestellt, welches auf dem Fundament 48 angeordnet wird. Das Hülsensegment kann als schmale Kunststoffbahn bereitgestellt werden, welche entrollt wird, so dass durch Zusammenbringen an den kurzen Seiten des Hülsensegments 80 eine Stoßkante 82 gebildet wird, welche das Hülsensegment 80 in eine zylindrische Form bringt. An der Stoßkante 82 kann das Hülsensegment 80 beispielsweise mittels einer nicht in Figur 10 dargestellten Verbindungsplatte verschraubt oder vernietet werden. Das Hülsensegment 80 deckt somit einen Bereich zwischen der oberen Kante 84 und der unteren Kante 86 ab, der im gezeigten Beispiel ein Fünftel der Außenhöhe der Hülse 4 entspricht. In das Innere des Hülsensegments 80 wird dann eine Haltevorrichtung 20 eingesetzt, wobei die erste Schwenkachse 22 und die zweite Schwenkachse 24 sowie die beiden Streben 38 ebenfalls auf ein Fünftel ihrer Länge gekürzt sind. Nachdem die Haltevorrichtung 20, wie bereits oben beschrieben, von der ersten Position in die zweite Position verlagert ist, stützt die Haltevorrichtung 20 das Innere des Hülsensegments 80 ab.

In einem nächsten Schritt wird dann ein weiteres Hülsensegment 80 über dem ersten Hülsensegment 80 angebracht werden, wobei hier im Inneren wiederum eine zweite Haltevorrichtung 20 angeordnet wird, so dass die Kombination aus zweitem Hülsensegment 80 und zweiter Haltevorrichtung 20 ein weiteres Fünftel der Hülse abdeckt. Die entsprechend gekürzten erste und zweite Schwenkachsen 22, 24 und Streben 38 des zweiten Hülsensegments kommen dabei über den entsprechenden Schwenkachsen 22, 24 und Streben 38 des ersten Hülsensegments 80 zu liegen. Dieser Vorgang wird nun mit der gewünschten Zahl von Haltevorrichtungen 20 fortgesetzt, bis eine zylindrische Außenfläche mittels der Hülsensegmente 80 erreicht wird, welche der in den obigen Ausführungsbeispielen gezeigten Hülse 4 entspricht.

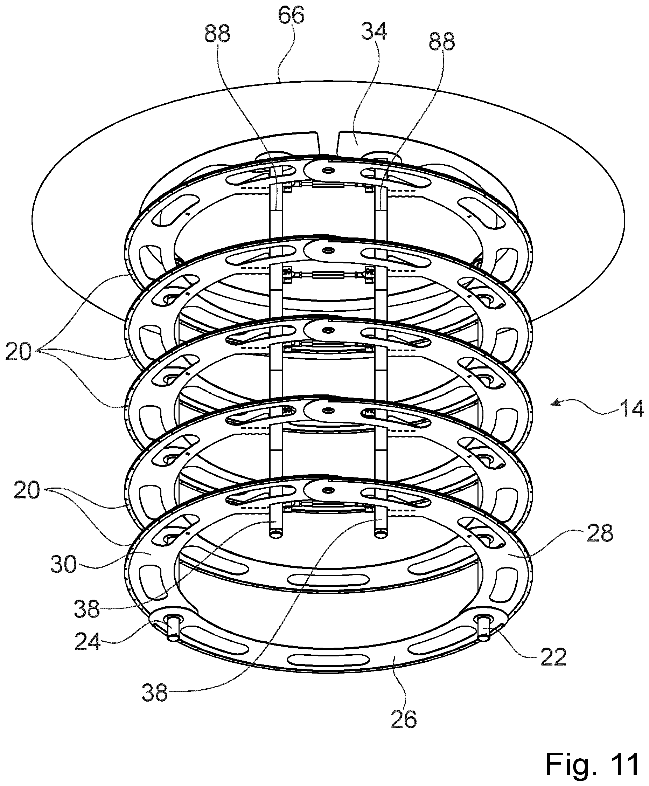

Im Ergebnis erhält man dann wiederum eine Abstützung 14, welche ohne Hülsensegmente 80 in Figur 11 gezeigt ist. Die Darstellung in der Figur 11 entspricht dabei einer perspektivischen Ansicht von einer Position unterhalb des Fundaments 48. Man erkennt, dass die einzelnen Haltevorrichtungen 20 jeweils an Verbindungsstellen 88 mit den benachbarten Haltevorrichtungen 20 zusammengesetzt sind. Auf diese Weise lässt sich eine einfachere Handhabung der Abstützung 14 erreichen, welche auch ohne große Krananlagen die Baugrube bis zur Bestückung mit dem Energiespeicher 50 mit einer temporären Abstützung 14 versehen werden kann. Zwischen benachbarten Hülsensegmenten 80 kann zwischen der oberen Kante 84 und der unteren Kante 86 das Kunststoffmaterial entweder verschweißt werden oder aber über speziell geformte Leisten mechanisch verbunden werden. Dazu könnten an der oberen Kante 84 bzw. der unteren Kante 86 jeweils voneinander wegweisende L-förmige Vorsprünge vorgesehen sein, über die ähnlich einer Verbindung mit einer T-Nut eine Halteleiste geschoben werden kann. Die Halteleiste würde dabei einen rechteckförmigen Querschnitt aufweisen, der entlang einer Mittenlinie geöffnet wäre. Aufgrund des segmentweisen Aufbaus kommt es beim Zusammensetzen der temporären Abstützung 14 zu einer erheblichen Gewichtseinsparnis bei der Installation, so dass der Zusammenbau insgesamt einfacher wäre.

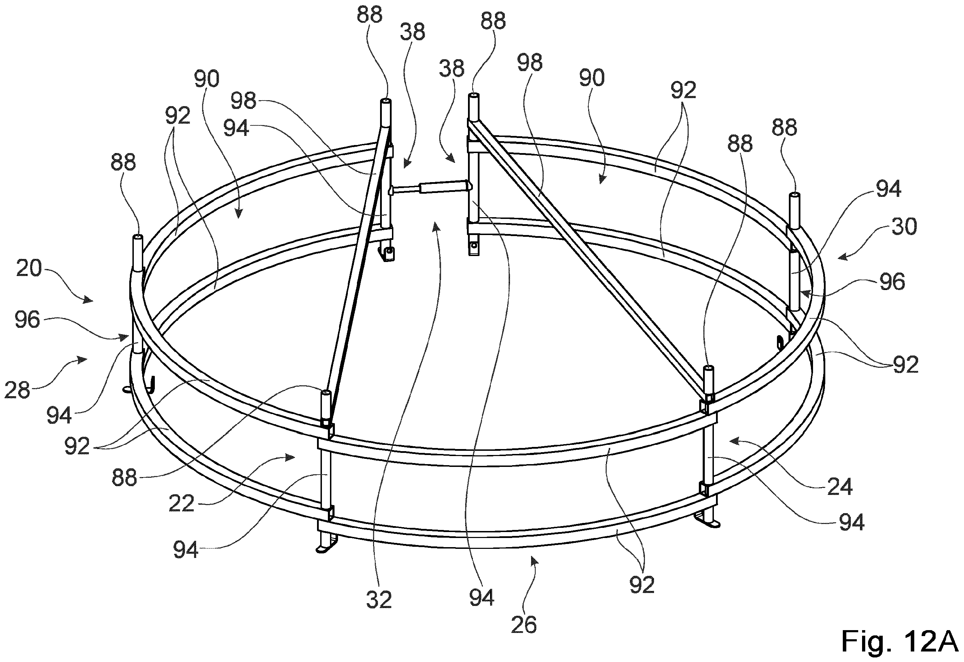

In Bezugnahme auf Figur 12A ist eine weitere Ausführungsform der Erfindung gezeigt. Die Haltevorrichtung 20 umfasst hier wiederum mehrere Segmente, welche in Form von Rahmen ausgebildet sind. Das erste Segment 26, das zweite Segment 28, das dritte Segment 30 und die weiteren Segmente 90 werden dabei jeweils von horizontalen Rahmensegmenten 90 und vertikalen Rahmensegmenten 94 gebildet, wobei insbesondere die benachbarten Segmente sich vertikal laufende Rahmensegmente 94 teilen können. Horizontale Rahmensegmente 92 können zwischen benachbarten Segmenten versetzt angeordnet werden, so dass wiederum die erste Schwenkachse 22 und die zweite Schwenkachse 24 zwischen dem ersten Segment 26 und dem zweiten Segment 28 bzw. zwischen dem ersten Segment 26 und dem dritten Segment 30 ausgebildet sind. Zusätzlich können auch weitere Schwenkachsen zwischen dem zweiten Segment 28 und dem sich daran anschließenden weiteren Segment 90 bzw. zwischen dem dritten Segment 30 und dem sich daran anschließenden weiteren Segment 90 angebracht sein, welche in Figur 12A mit dem Bezugszeichen 96 gekennzeichnet sind. Zwischen den einander zuweisenden vertikalen Rahmensegmenten 94 der weiteren Segmente 90, welche den Streben 38 der bisherigen Ausführungsformen gleichgesetzt werden können, ist wiederum eine Verstelleinrichtung 32 beispielsweise in Form eines Spannschlosses angeordnet. Jede der Streben 38 ist über Verriegelungsleisten 98 mit der ersten Schwenkachse 22 bzw. der zweiten Schwenkachse 24 diagonal verbunden, so dass diese nach Verlagern von der ersten Position in die zweite Position zusätzlich gehalten werden.

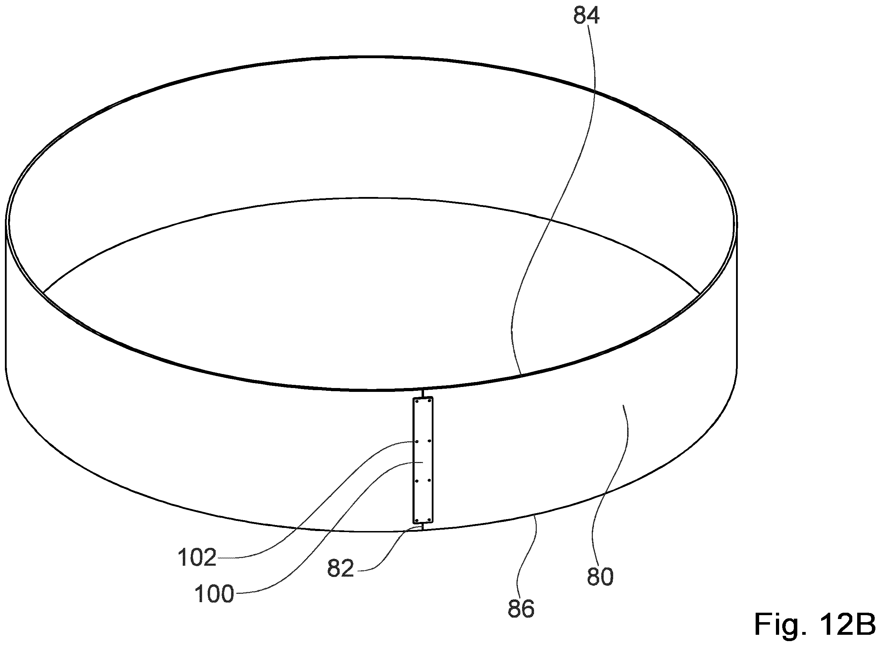

Unter Bezugnahme auf Figur 12B ist nachfolgend ein erstes Hülsensegment 80 gezeigt, bei dem an der Stoßkante 82 nun eine Verbindungsplatte 100 angeordnet ist, welche beispielsweise durch Schrauben oder Niete als Sicherungselemente 102 die beiden Enden des Hülsensegments 80 miteinander verbindet. Wie bereits im Zusammenhang mit Figur 10 erläutert, wird das erste Hülsensegment 80 zunächst in die Baugrube eingebracht und mittels der Verbindungsplatte 100 in die gewünschte zylindrische Form gebracht.

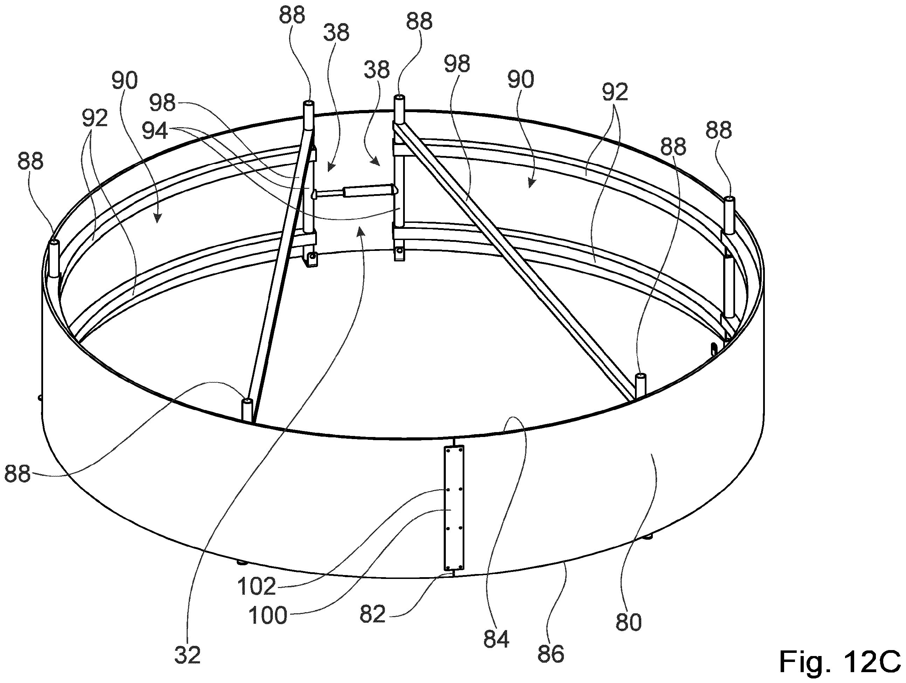

Daran anschließend wird nun die Haltevorrichtung 20, wie sie in Figur 12A gezeigt ist, in das Innere des ersten Hülsensegments 80 eingebracht und mittels der als Spannschloss ausgebildeten Verriegelung 32 in die endgültige Form gebracht, in welcher der Außenumfang der Haltevorrichtung 20 dem Innenumfang des Hülsensegments 80 entspricht. Das Ergebnis mit der im Inneren des Hülsensegments 80 eingebrachten Haltevorrichtung 20 ist in Figur 12C gezeigt. Nachdem die zweite Position erreicht ist, werden die Verriegelungsleisten 98 angebracht, wobei hier zweckmäßigerweise ein Zusammenstecken mit den übrigen Komponenten der Haltevorrichtung 20 erfolgt.

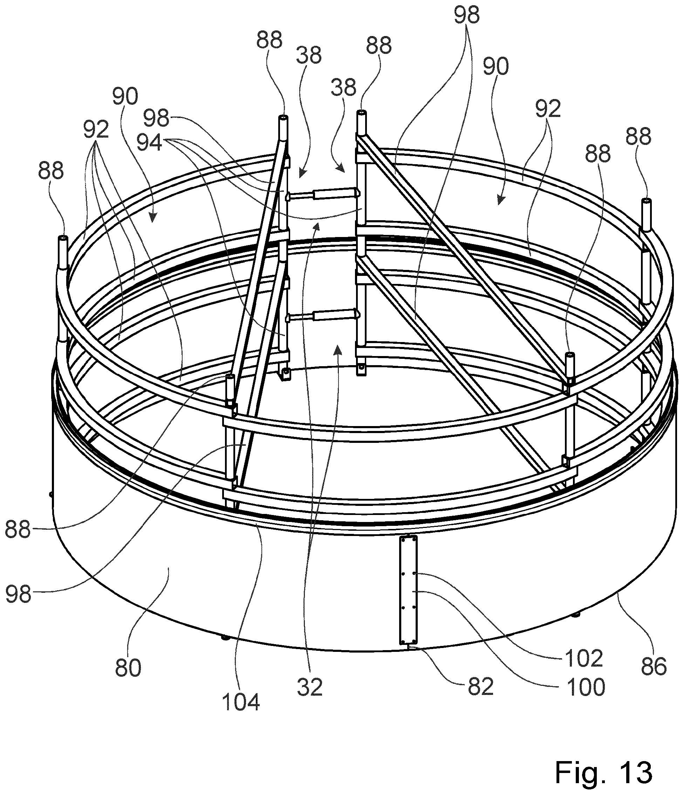

Dieser Vorgang wird nun wiederholt, bis die gewünschte Höhe für den Energiespeicher 50 erreicht ist. Dazu wird zunächst eine weitere Kunststoffbahn als zweites Hülsensegment 80 über dem ersten Hülsensegment angeordnet werden und eine zweite Haltevorrichtung 20 in der ersten Position in das Innere des zweiten Hülsensegments 80 eingebracht werden. Beispielhaft ist hierzu in Figur 13 eine weitere Haltevorrichtung 20 oberhalb der ersten Haltevorrichtung 20 gezeigt. Um das Innere erkennen zu können, wurde das zweite Hülsensegment in Figur 13 weggelassen. Nachdem die weitere Haltevorrichtung 20 in ihrer endgültigen Position ist, wird wiederum an den dafür vorgesehenen Stellen jeweils eine Verriegelungsleiste 98 angebracht.

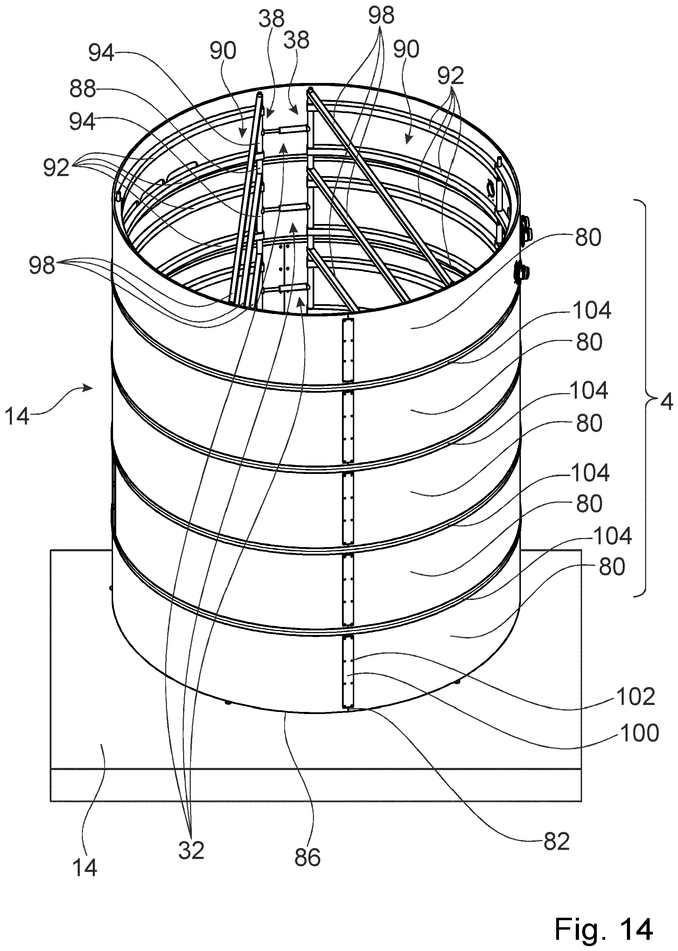

Dieser Vorgang wird nun für die zusätzlichen Segmente wiederholt, so dass im Ergebnis mehrere Hülsensegmente 80 übereinanderliegend die Hülse 4 bilden. Dabei können benachbarte Hülsensegmente so orientiert sein, dass ihre Stoßkanten 82 nicht übereinander liegen, so dass keine durchgängige Nahtstelle entlang der Hülse 4 geschaffen wird. Wie in Figur 14 gezeigt ist, sind dazu die Hülsensegmente 80 bezüglich ihrer Nachbarn unterschiedlich orientiert. Am obersten Hülsensegment 80 können noch Durchleitungen 44 vorgesehen sein, wie bereits oben im Zusammenhang mit den anderen Ausführungsformen erläutert wurde. Um das Zusammenführen der einzelnen Hülsensegmente zu einer gesamten Hülse 4 zu erleichtern, können auch zwischen benachbarten Hülsensegmenten 80 entsprechende H-förmig ausgebildete Profilleisten eingebracht werden, welche in Figur 14 mit den Bezugszeichen 104 gekennzeichnet sind. Die weiteren Schritte des Auffüllens der Baugrube wird dabei analog der bereits oben ausgeführten Beschreibung vorgenommen werden. Nach Anlieferung des Energiespeichers 50 wird für die oberste Anordnung zunächst die Verriegelungsleisten 98 entfernt und anschließend das Spannschloss 32 gelöst. Die übrigen Elemente der Haltevorrichtung 20 können dann sukzessive entfernt werden. Dieser Vorgang wiederholt sich, bis sämtliche Elemente der Abstützung 14 entfernt wurden, so dass in das Innere der Hülse 4, welche aus den Hülsensegmenten 80 zusammengesetzt ist, der Energiespeicher 50 eingebracht werden kann.

Die bereits oben beschriebene Abdeckung 66 kann hier selbstverständlich auf gleiche Weise realisiert werden, ohne dass dies in den Figuren explizite dargestellt ist. So kann die Aussteifung 14 mit einer Aufnahme 40 für einen Abschlussträger 34 versehen sein, der bis zum Einsetzen des Energiespeichers mit einer Abdeckung 66 der Hülse 4 versehen sein kann. Die auf einer der Schwenkachsen 22 und 24 abgewandten Seite zusätzlichen vertikalen Streben 38 können die Abdeckung 66 der Hülse 4 zusätzlich tragen. Der Unterschied zwischen den Ausführungsformen nach Figur 1 bis 9 und denen nach Figur 10 bis 14 besteht lediglich darin, dass die Hülse 4 und die Aussteifung 14 entweder vollständig in einem Schritt bereitgestellt sind oder aber sukzessive aus mehreren Hülsensegmenten 80 und Haltevorrichtungen 20 aufgebaut werden.

Die mechanisch empfindlichen Komponenten, wie der Energiespeicher 50 selbst, werden erst nach Abschluss der Außenarbeiten installiert, so dass keine Gefahr besteht, dass dieser durch andere Arbeiten beschädigt wird. Im Vergleich zu anderen Installationen, die ein betoniertes Flüssigkeitsreservoir, das Bereitstellen von Betonfertigteilen oder entsprechender Verbaumaßnahmen erfordern, wären deutlich aufwändiger, so dass die Installation eines Energiespeichers 50 gemäß der Erfindung kostengünstiger vorgenommen werden kann. Durch das Verlagern der Haltesegmente sowie das Einrollen der Hülle ist auch ein platzsparender Transport der erfindungsgemäßen Anordnung möglich, so dass keine speziellen Schwertransporte oder dergleichen vorgenommen werden müssen, was ebenfalls reduzierte Kosten und entsprechenden Aufwand zur Folge hat. Die erfindungsgemäße Anordnung kann daher die weitere Verbreitung von derartigen Energiespeichern fördern, was im Zuge der angestrebten Reduzierung des CO₂-Ausstoßes auch dringend geboten erscheint.

Die vorstehend und die in den Ansprüchen angegebenen sowie die den Abbildungen entnehmbaren Merkmale sind sowohl einzeln als auch in verschiedener Kombination vorteilhaft realisierbar.

Die Erfindung wird durch die beigefügten Ansprüche definiert.

### Liste der Bezugszeichen:

- 2: Anordnung
- 4: Hülse
- 6: Längsnaht
- 8: Innenfläche
- 10: Unterseite
- 12: Außenfläche
- 14: Abstützung
- 16: Einschubrichtung
- 16': Ausführrichtung
- 18: Inneres
- 20: Haltevorrichtung
- 22: erste Schwenkachse
- 24: zweite Schwenkachse
- 26: erstes Segment
- 28: zweites Segment
- 30: drittes Segment
- 32: Verstelleinrichtung
- 34: Abschlussträger
- 36: Aufnahme
- 38: Streben
- 40: Aufnahme
- 42: Anschlusskasten
- 44: Durchleitung
- 46: Gewebe
- 48: Fundament
- 50: Energiespeicher
- 52: Deckel
- 54: erster Wärmetauscher
- 56: Öffnung
- 58: zweiter Wärmetauscher
- 60: Folie
- 66: Abdeckung
- 68: erste Anschlussvorrichtung
- 70: zweite Anschlussvorrichtung
- 72: erste Gewindestange
- 74: zweite Gewindestange
- 76: Überwurfmutter
- 80: Hülsensegment
- 82: Stoßkante
- 84: obere Kante
- 86: untere Kante
- 88: Verbindungsstellen
- 90: Rahmensegmente
- 90: weiteres Segment
- 92: horizontales Rahmensegment
- 94: vertikales Rahmensegment
- 96: weitere Schwenkachse
- 98: Verriegelungsleiste
- 100: Verbindungsplatte
- 102: Sicherungselemente
- 104: Profilleiste

## Patentansprüche

1. Anordnung zur Installation eines wenigstens teilweise in einem Erdreich eingesenkten Energiespeichers (50), umfassend eine Hülse (4), die wenigstens teilweise im Erdreich versenkt positionierbar ist,
**gekennzeichnet durch**
eine verstellbare Abstützung (14) der Hülse (4), wobei die Abstützung (14) eine Vielzahl von schwenkbaren Haltevorrichtungen (20) umfasst, die entlang wenigstens einer Schwenkachse (22; 24) übereinanderliegend entlang einer Längsachse angeordnet sind und die sich von einer ersten Position mit einer ersten Außenform in eine zweite Position mit einer zweiten Außenform verlagern lassen, wobei die zweite Außenform ein größeres Volumen als die erste Außenform umschließt und die zweite Außenform einer Innenfläche (8) der Hülse (4) entspricht, in die der Energiespeicher (50) einsetzbar ist, wobei die Hülse (4) vor dem Einsetzen des Energiespeichers (50) in ihr Inneres (18) durch die Abstützung (14) formstabil gehalten ist.

2. Anordnung nach Anspruch 1, bei der die Hülse (4) als mehrteilige Kunststoffbahn in Form von Hülsensegmenten (80) bereitgestellt ist, die an ihren Enden an einer Längsnaht (6) verbunden sind oder an ihren Enden eine Stoßkante (2) bilden.

3. Anordnung nach Anspruch 2, bei der die Kunststoffbahn entlang der Längsnaht (6) verschweißt ist oder mittels einer Verbindungsplatte (100) gesichert ist.

4. Anordnung nach einem der Ansprüche 1 bis 3, bei der wenigstens zwei Schwenkachsen (22, 24) vorgesehen sind, die mit ersten Segmenten (26) der Haltevorrichtungen (20) verbunden sind, wobei sich an die erste Schwenkachse (22) zweite Segmente (28) der Haltevorrichtungen (20) und an die zweite Schwenkachse (24) dritte Segmente (30) der Haltevorrichtungen (20) anschließen.

5. Anordnung nach Anspruch 4, bei der die zweiten Segmente (28) von den Haltevorrichtungen (20) und die dritten Segmente (30) von den Haltevorrichtungen (20) an ihren den jeweiligen Schwenkachsen (22; 24) abgewandten Enden mit weiteren Segmenten (90) vorzugsweise über weitere Schwenkachsen (96) verbunden sind, wobei die weiteren Segmente (90) miteinander über eine Verstelleinrichtung (32) verstellbar verbunden sind.

6. Anordnung nach Anspruch 5, bei der das weitere Segment (90) an dem der Verstelleinrichtung (32) zugewandten Ende über eine Verriegelungsleiste (98) mit einer Schwenkachse (22; 24) verbunden ist.

7. Anordnung nach einem der Ansprüche 1 bis 6, bei der die Haltevorrichtungen (20) in Form eines Rahmens mit vertikalen Rahmensegmenten (94) und horizontalen Rahmensegmenten (92) und zumindest an ihrer Außenseite in Form von Teilkreisringen ausgebildet sind.

8. Anordnung nach Anspruch 7, bei der die Haltevorrichtungen (20) als vorgefertigte Metallteile ausgebildet sind.

9. Anordnung nach einem der Ansprüche 2 bis 8, bei der die Vielzahl von Haltevorrichtungen (20) parallel zueinander angeordnet sind, wobei die Haltevorrichtungen (20) eine Höhe aufweisen, welche mit der des Hülsensegments (80) korrespondiert.

10. Anordnung nach einem der Ansprüche 1 bis 9, bei der die Schwenkachsen (22; 24) an ihrer dem Boden des Erdreichs abgewandten Seite über die Haltevorrichtungen (20) hinausragen und mit einer Aufnahme (40) für einen Abschlussträger (34) versehen sind, der bis zum Einsetzen des Energiespeichers mit einer Abdeckung (66) der Hülse (4) versehen sein kann.

11. Anordnung nach einem der Ansprüche 1 bis 10, bei der auf einer der Schwenkachsen (22; 24) abgewandten Seite zusätzliche vertikale Streben (38) angeordnet sind, die vorzugsweise die Abdeckung (66) der Hülse (4) zusätzlich tragen.

12. Verfahren zur Installation eines wenigstens teilweise in einem Erdreich eingesenkten Energiespeichers mit einer Anordnung (2) nach einem der Ansprüche 1 bis 11, wobei nach Aushub einer Einsenkung in einem Erdreich sukzessive einzelne Hülsensegmente (80) der Hülse (4) eingesetzt werden,
**dadurch gekennzeichnet, dass**
nach jedem Einsetzen eines Hülsensegments (80) eine Haltevorrichtung (20) der Abstützung (14) in ihrer ersten Position in das Innere der Hülse (4) eingeführt wird und bis zum Einsetzen des Energiespeichers (50) in ihre zweite Position gebracht wird, und anschließend weitere Hülsensegmente (80) und Haltevorrichtungen (20) der Abstützung (14) eingebracht werden, bis die Hülse (4) vollständig zusammengesetzt ist.

13. Verfahren nach Anspruch 12, bei dem zum Einsetzen des Energiespeichers (50) die Abstützung (14) nach Überführen in die erste Position entfernt wird.

14. Verfahren nach Anspruch 12 oder 13, bei dem nach Aushub einer Einsenkung in dem Erdreich und Einsetzen der Hülse (4) eine Aufschüttung eines Bereichs zwischen Hülse (4) und Erdreich mit selbstkomprimierbarem Schüttgut erfolgt.

15. Verfahren nach einem der Ansprüche 12 bis 14, bei dem nach Aushub einer Einsenkung in dem Erdreich und Einsetzen der Hülse (4) während einer Aufschüttung eines Bereichs zwischen Hülse (4) und Erdreich ein oder mehrere Lagen eines vorzugsweise textilen Gewebes (46) in den Bereich zwischen Hülse (4) und Erdreich eingebracht werden, das mit der Hülse (4) verbunden ist.

## Claims

1. Assembly for installing an energy store (50) which is at least partially sunk in the ground, comprising a sleeve (4) which can be positioned so as to be at least partially sunk in the ground,
**characterized by**
an adjustable support (14) of the sleeve (4), the support (14) comprising a plurality of pivotable holding devices (20) which are arranged on top of one another along at least one pivot shaft (22; 24) along a longitudinal axis, and which can be displaced from a first position having a first exterior shape into a second position having a second exterior shape, the second exterior shape enclosing a larger volume than the first exterior shape and the second exterior shape corresponding to an inner surface (8) of the sleeve (4), into which the energy store (50) can be inserted, the sleeve (4) being kept dimensionally stable by the support (14) before the energy store (50) is inserted into its interior (18).

2. Assembly according to claim 1, wherein the sleeve (4) is provided as a multi-part plastics web in the form of sleeve segments (80) which are connected at their ends at a longitudinal seam (6) or form an abutting edge (2) at their ends.

3. Assembly according to claim 2, wherein the plastics web is bonded along the longitudinal seam (6) or is secured by means of a connecting plate (100).

4. Assembly according to any of claims 1 to 3, wherein at least two pivot shafts (22, 24) are provided, which are connected to first segments (26) of the holding devices (20), wherein second segments (28) of the holding devices (20) adjoin the first pivot shaft (22) and third segments (30) of the holding devices (20) adjoin the second pivot shaft (24).

5. Assembly according to claim 4, wherein the second segments (28) of the holding devices (20) and the third segments (30) of the holding devices (20) are connected to further segments (90) at the ends thereof that face away from the respective pivot shafts (22; 24), preferably by means of further pivot shafts (96), wherein the further segments (90) are adjustably interconnected by means of an adjusting device (32).

6. Assembly according to claim 5, wherein the further segment (90) is connected to a pivot shaft (22; 24) at the end thereof that faces the adjusting device (32) by means of a locking bar (98).

7. Assembly according to any of claims 1 to 6, wherein the holding devices (20) are designed in the form of a frame having vertical frame segments (94) and horizontal frame segments (92) and, at least on their outer side, are designed in the form of partial circular rings.

8. Assembly according to claim 7, wherein the holding devices (20) are designed as prefabricated metal parts.

9. Assembly according to any of claims 2 to 8, wherein the plurality of holding devices (20) are arranged in parallel with one another, wherein the holding devices (20) are at a height which corresponds to that of the sleeve segment (80).

10. Assembly according to any of claims 1 to 9, wherein the pivot shafts (22; 24) project beyond the holding devices (20) on the side thereof facing away from underground and are provided with a receptacle (40) for an end support (34), which can be provided with a cover (66) of the sleeve (4) until the energy store is inserted.

11. Assembly according to any of claims 1 to 10, wherein additional vertical struts (38) are arranged on a side facing away from the pivot shafts (22; 24), which struts preferably additionally support the cover (66) of the sleeve (4).

12. Method for installing an energy store which is at least partially sunk in the ground and comprises an assembly (2) according to any of claims 1 to 11, wherein, after excavation of a depression in the ground, successive individual sleeve segments (80) of the sleeve (4) are inserted,
**characterized in that**
after each insertion of a sleeve segment (80), a holding device (20) of the support (14) is introduced into the interior of the sleeve (4) in its first position and is brought into its second position until the energy store (50) is inserted, and further sleeve segments (80) and holding devices (20) of the support (14) are then introduced until the sleeve (4) is completely assembled.

13. Method according to claim 12, wherein, for the insertion of the energy store (50), the support (14) is removed after being transferred into the first position.

14. Method according to either claim 12 or claim 13, wherein, after excavation of a depression in the ground and insertion of the sleeve (4), a region between the sleeve (4) and the ground is filled with self-compressible bulk material.

15. Method according to any of claims 12 to 14, wherein, after excavation of a depression in the ground and insertion of the sleeve (4), during a filling of a region between the sleeve (4) and the ground, one or more layers of a preferably textile woven fabric (46) are introduced into the region between the sleeve (4) and the ground, which fabric is connected to the sleeve (4).

## Revendications

1. Agencement pour l'installation d'un accumulateur d'énergie (50) encastré au moins partiellement dans un sol, comprenant un manchon (4) pouvant être positionné au moins partiellement de manière encastrée dans le sol,
**caractérisé par**
un support (14) réglable du manchon (4), le support (14) comprenant une pluralité de dispositifs de retenue (20) pivotants qui sont disposés le long d'au moins un axe de pivotement (22 ; 24) en chevauchement le long d'un axe longitudinal et qui peuvent se déplacer d'une première position comportant une première forme externe vers une seconde position comportant une seconde forme externe, la seconde forme externe enveloppant un volume supérieur à celui de la première forme externe, et la seconde forme externe correspondant à une surface interne (8) du manchon (4) dans laquelle l'accumulateur d'énergie (50) peut être inséré, le manchon (4) étant maintenu de manière indéformable par le support (14) avant l'insertion de l'accumulateur d'énergie (50) dans son intérieur (18).

2. Agencement selon la revendication 1, dans lequel le manchon (4) est fourni comme bande en matière synthétique à plusieurs parties sous la forme de segments de manchon (80) qui sont reliés, au niveau de leurs extrémités, à une couture longitudinale (6) ou forment, au niveau de leurs extrémités, une arête de butée (2).

3. Agencement selon la revendication 2, dans lequel la bande en matière synthétique est soudée le long de la couture longitudinale (6) ou est fixée à l'aide d'une plaque de liaison (100).

4. Agencement selon l'une des revendications 1 à 3, dans lequel au moins deux axes de pivotement (22, 24) sont prévus, lesquels sont reliés à des premiers segments (26) des dispositifs de retenue (20), des deuxièmes segments (28) des dispositifs de retenue (20) se raccordant au premier axe de pivotement (22) et des troisièmes segments (30) des dispositifs de retenue (20) se raccordant au second axe de pivotement (24).

5. Agencement selon la revendication 4, dans lequel les deuxièmes segments (28) des dispositifs de retenue (20) et les troisièmes segments (30) des dispositifs de retenue (20) sont reliés, au niveau de leurs extrémités opposées aux axes de pivotement (22 ; 24) respectifs, à des segments supplémentaires (90), de préférence par l'intermédiaire d'axes de pivotement supplémentaires (96), les segments supplémentaires (90) étant reliés entre eux de manière réglable par l'intermédiaire d'un appareil de réglage (32).

6. Agencement selon la revendication 5, dans lequel le segment supplémentaire (90) est relié, au niveau de l'extrémité tournée vers l'appareil de réglage (32), à un axe de pivotement (22 ; 24) par l'intermédiaire d'une barrette de verrouillage (98).

7. Agencement selon l'une des revendications 1 à 6, dans lequel les dispositifs de retenue (20) sont réalisés sous la forme d'un cadre comportant des segments de cadre verticaux (94) et des segments de cadre horizontaux (92), et sous la forme d'anneaux circulaires partiels au moins au niveau de leur côté extérieur.

8. Agencement selon la revendication 7, dans lequel les dispositifs de retenue (20) sont réalisés comme des pièces métalliques préfabriquées.

9. Agencement selon l'une des revendications 2 à 8, dans lequel la pluralité de dispositifs de retenue (20) sont disposés parallèlement les uns aux autres, les dispositifs de retenue (20) présentant une hauteur qui correspond à celle du segment de manchon (80).

10. Agencement selon l'une des revendications 1 à 9, dans lequel les axes de pivotement (22 ; 24) font saillie au-delà des dispositifs de retenue (20) au niveau de leur côté opposé au fond du sol et sont pourvus d'un logement (40) pour une poutre d'extrémité (34) qui peut être pourvue d'un élément de recouvrement (66) du manchon (4) jusqu'à l'insertion de l'accumulateur d'énergie.

11. Agencement selon l'une des revendications 1 à 10, dans lequel des entretoises (38) verticales supplémentaires sont disposées sur un côté opposé aux axes de pivotement (22 ; 24), lesquelles entretoises supportent en outre de préférence l'élément de recouvrement (66) du manchon (4).

12. Procédé permettant l'installation d'un accumulateur d'énergie encastré au moins partiellement dans un sol au moyen d'un agencement (2) selon l'une des revendications 1 à 11, des segments de manchon (80) individuels successifs du manchon (4) étant insérés dans un sol après l'excavation d'un renfoncement,
**caractérisé en ce que**
après chaque insertion d'un segment de manchon (80), un dispositif de retenue (20) du support (14) est introduit à l'intérieur du manchon (4) dans sa première position et est amené dans sa seconde position jusqu'à l'insertion de l'accumulateur d'énergie (50), puis des segments de manchon (80) et dispositifs de retenue (20) supplémentaires du support (14) sont introduits, jusqu'à ce que le manchon (4) soit entièrement assemblé.

13. Procédé selon la revendication 12, dans lequel, pour l'insertion de l'accumulateur d'énergie (50), le support (14) est retiré après son passage dans la première position.

14. Procédé selon la revendication 12 ou 13, dans lequel, après l'excavation d'un renfoncement dans le sol et l'insertion du manchon (4), une zone entre le manchon (4) et le sol est remblayée avec des matériaux en vrac à compression automatique.

15. Procédé selon l'une des revendications 12 à 14, dans lequel, après l'excavation d'un renfoncement dans le sol et l'insertion du manchon (4),
pendant un remblayage d'une zone entre le manchon (4) et le sol, une ou plusieurs couches d'un tissu (46) de préférence textile sont introduites dans la zone entre le manchon (4) et le sol, lequel tissu est relié au manchon (4).
